# EUROPEAN PATENT SPECIFICATION

(11) **EP 0 710 785 B1**
(45) Date of publication and mention of the grant of the patent: **14.01.1998**
(21) Application number: 95116124.9
(22) Date of filing: 12.10.1995
(51) Int. Cl.: F16H 57/00, F16H 55/36, F02F 7/00

(54) **Noise-reducing pulley arrangement**
Geräusch vermindernde Riemenscheibenvorrichtung
Dispositif de réduction de bruit dans les poullies

(30) Priority: 04.11.1994 JP 270782/94
(43) Date of publication of application: 08.05.1996
(73) Proprietor: TOYOTA JIDOSHA KABUSHIKI KAISHA, Aichi-ken 471 (JP)
(72) Inventor: Kamiya, Tamotsu, Susono-shi, Sizuoka-ken 410-11 (JP); Ogawa, Yoshihide, Ebina-shi, Kanagawa-ken 243-04 (JP)
(74) Representative: Tiedtke, Harro, Dipl.-Ing.

(56) References cited:
- FR-A- 1 105 980
- JP-U-59 196 535
- PATENT ABSTRACTS OF JAPAN vol. 950 no. 003 & JP-A-07 077243 (TOYOTA MOTOR CORP) 20 March 1995,

## Description

### TECHNICAL FIELD

The present invention relates generally to a power transmission apparatus containing a transmission pulley for transmitting power generated by a power source such as an automotive engine to other devices. More particularly, the present invention relates to a power transmission apparatus that includes a transmission pulley having a shape that reduces noise.

### RELATED BACKGROUND ART

A partially cutaway view of a related art automotive engine is shown in Fig. 5 which corresponds to Fig. 1 of JP-U-59-196535. A timing gear 43, fitted on the crankshaft 45 of the engine, is connected with a timing belt 44. A front cover 42, applied to a cylinder block 41, shields the members 43,44,45. A crank pulley 46, fitted to the outer end portion of the shaft 45, located outside the cover 42, drives an accessory such as alternator (not shown). Noise is generated near the pulley 46 when it is rotated.

Reasons for such noise will be described below. The engine contains a plurality of cylinders, a plurality of pistons (not shown) and a plurality of connecting rods (not shown) for connecting the pistons with the shaft 45. The pistons and the connecting rods are operated by cyclic rises in the combustion pressure in the cylinders to rotate the shaft 45. In this process, a cyclic load is applied to the shaft 45 whenever the combustion pressure rises in the respective cylinders. Thus, the pulley 46, which rotates together with the shaft 45, is oscillated in the direction orthogonal to the axis of the shaft 45. A space V is provided between the inner surface 47 of the pulley 46 and the wall surface 42a of the cover 42. This space V communicates with the outside via a clearance S. When the pulley 46 is oscillated, the air in this space V is vibrated to generate noise from the inner surface 47.

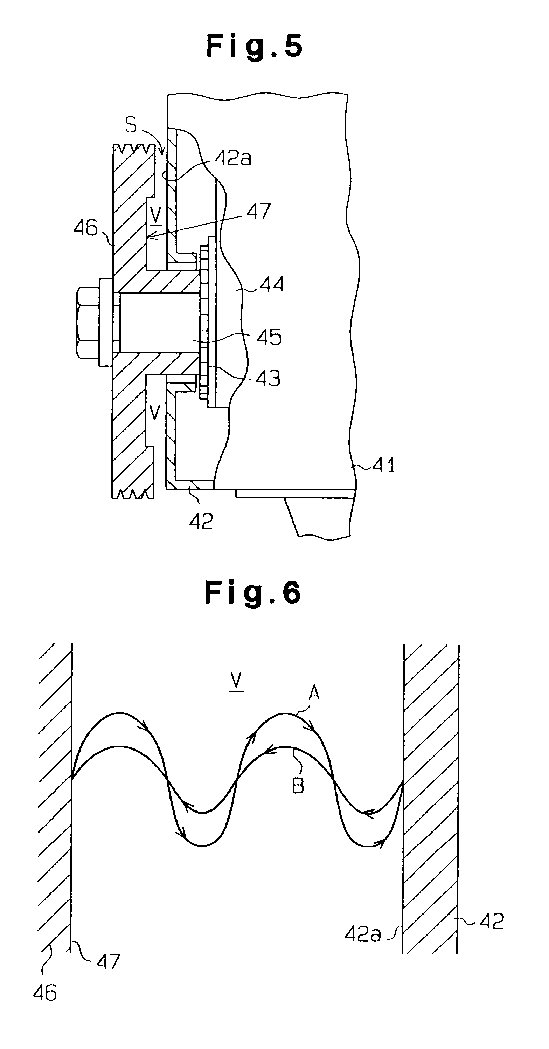

Fig. 6 diagrammatically shows the noise, i.e. aerial oscillatory waves, generated between the inner surface 47 and the wall surface 42a. In the space V, an aerial oscillatory wave A generated on the inner surface 47 is reflected by the wall surface 42a to generate another aerial oscillatory wave B. These two oscillatory waves A,B sometimes assume the same phase. Thus, when these oscillatory waves A,B overlap with each other to resonate, a wave having an increased amplitude is formed. Consequently, a standing wave having a great amplitude is generated in the space V, which leaks out through the clearance S to cause noise. In other words, the space V serves as a sort of resonance box having a specific resonance frequency which is decided by the distance between the inner surface 47 and the wall surface 42a. This resonance box amplifies the noise caused by the oscillation of the pulley 46 and generates noise through the clearance S.

Said JP-U-59-196535 discloses an example of power transmission apparatus for overcoming the inconveniences described above and the features as defined in the preamble of claim 1. As shown in Fig. 7 which corresponds to Fig. 3 of JP-U-59-196535, a cover 42 in this apparatus has a plurality of annular ribs and grooves 42b on its wall surface 42a. A pulley 46 also has a plurality of annular ribs and grooves 47a to oppose to the ribs and grooves 42b on the inner surface 47, respectively. These ribs and grooves 42b,47a are arranged in the radial direction concentrically around the shaft 45. The presence of these ribs and grooves 42b,47a forms non-parallel portions on the wall surface 42a and the inner surface 47 with respect to each other. Accordingly, an aerial oscillatory wave generated on the inner surface 47 is reflected by the wall surface 42a in a wave. Thus, the standing wave between the pulley 46 and the cover 42 has a reduced amplitude, and the noise caused by the oscillation of the pulley 46 is reduced.

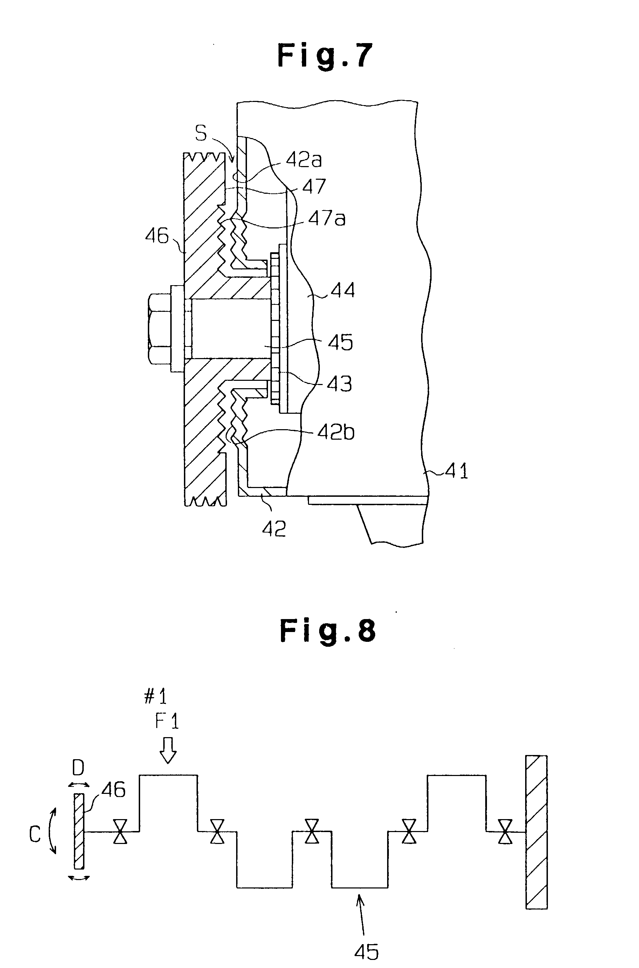

Fig. 8 shows schematically a relationship between the load to be applied to the crankshaft 45 (indicated by "F1" in a cylinder No. 1) and the oscillation of the crank pulley 46. As shown in Fig. 8, what most influences the oscillation of the pulley 46 is the load F1 caused by the combustion pressure in the cylinder No. 1. When the load F1 is applied to the shaft 45, the shaft 45 is oscillated in a direction orthogonal to the axis of the shaft 45, and such oscillation C induces oscillation D of the pulley 46. The oscillation D of the pulley 46 is maximum at the circumference of the pulley 46 in the direction that the load F1 is applied to the shaft 45. Meanwhile, the standing noise wave is generated on the pulley 46 at a site parallel to the direction in which the combustion load (load F1) is acted, whenever the combustion pressure of a cylinder assumes a maximum level, i.e. when the piston is located near the top dead point.

The standing noise wave is generated with such timing and at such site as described above by the aerial oscillatory waves caused by the oscillation D of the pulley 46 which overlap one another. This standing wave is amplified with time under an intrinsic resonance frequency which is decided by the distance between the pulley 46 and the cover 42.

In the related art described above, the distance between the ribs and grooves 42b and the ribs and grooves 47a is constant at any given position of the rotating pulley 46. Accordingly, oscillation of the pulley 46 inevitably generates a standing wave having a specific resonance frequency to amplify it, so that it is likely that no sufficient noise reduction is obtained.

The above problems are observed in the case of a crank pulley 46 for an automotive engine. However, these problems also occur in various types of other transmission pulleys which are fitted to rotary shafts to transmit powers.

### DISCLOSURE OF THE INVENTION

Accordingly, it is a primary objective of the present invention to provide a power transmission apparatus, in which amplification of a noise-causative standing wave is controlled by changing successively the distance between a transmission pulley attached to an output shaft of a power source and a wall surface opposing to the pulley to reduce noises.

To achieve the foregoing and other objects and in accordance with the purpose of the present invention, a power transmission apparatus is provided having the features of claim 1. The apparatus includes a rotary shaft disposed perependiculary to and extending through a substantially flat surface, and a transmission pulley mounted on the rotary shaft, and remoted by a predetermined distance from and opposed to the wall surface. The rotary shaft periodically receives load acting perpedicularly to the rotary shaft. Power of the rotary shaft is transmitted to driven members through the transmission pulley. The transmission pulley has an inner surface opposing to the wall surface. The inner surface has an element for varying the distance on at least one line extending parallel to an acting direction of the load and crossing a center of the transmission pulley.

### BRIEF DESCRIPTION OF THE DRAWINGS

The features of the present invention are set forth with particularity in the appended claims. The invention, together with the objects and advantages thereof, may best be understood by reference to the following description of the presently preferred embodiments together with the accompanying drawings in which:
Fig. 1 is a partially cutaway side view of a power transmission apparatus according to a first embodiment of the invention;
Fig. 2 is a cross-sectional view taken along the line 2-2 in Fig. 1;
Fig. 3 is a partially cutaway side view of a power transmission apparatus according to a second embodiment of the invention;
Fig. 4 is a cross-sectional view taken along the line 4-4 in Fig. 3;
Fig. 5 is a partially cutaway side view of a related art power transmission apparatus showing a positional relationship between a pulley and a cover;
Fig. 6 is an explanatory view of the mechanism how a standing wave is generated between the pulley and the cover shown in Fig. 5;
Fig. 7 is a partially cutaway side view of a related art power transmission apparatus having a structure for reducing noises; and
Fig. 8 is a schematic view showing a relationship between a load applied to the crankshaft and oscillation of the crank pulley in the related art power transmission apparatus.

### DESCRIPTION OF SPECIAL EMBODIMENTS

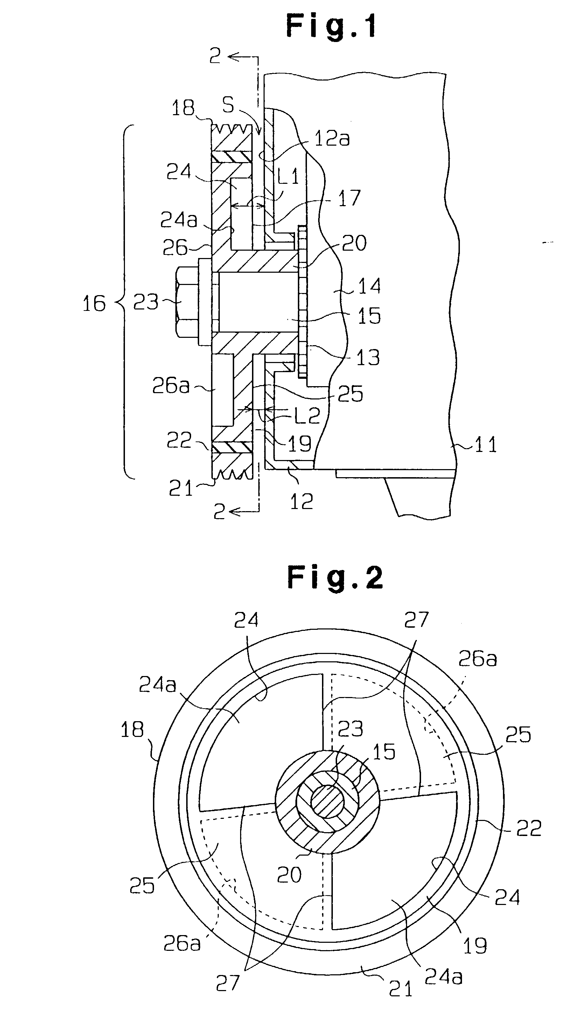

A first embodiment of the power transmission apparatus according to the present invention will be described below referring to Figs. 1 and 2.

A cylinder block 11 of an engine rotatably supports a crankshaft 15. The engine contains a plurality of cylinders, a plurality of pistons (not shown) for connecting the pistons with the shaft 15. A timing belt 14 is connected to a timing gear 13 fitted on the shaft 15. A front cover 12 fixed to the block 11 shields the gear 13 and the belt 14. The shaft 15 penetrates the cover 12 to protrude outward. The cover 12 has a flat wall surface 12a, and the axis of the shaft 15 intersects orthogonal with the wall surface 12a orthogonally.

A crank pulley 16 secured by a bolt 23 to the free end portion of the shaft 15 protruding from the cover 12 rotates together with the shaft 15. A clearance S is provided between the pulley 16 and the wall surface 12a to prevent them from interfering with each other. The pulley 16 includes a circular plate 19 formed around a boss 20, and a rim 18 attached to the periphery of the plate 19 with a resilient member 22. The rim 18 has a plurality of parallel grooves 21 extended in the circumferential direction.

A pair of recesses 24 are defined on the inner surface 17 of the plate 19 to open toward the wall surface 12a such that they are symmetrical with respect to the axis of the pulley 16. The inner surface 17 also contains a pair of flat surfaces (projections) 25 which are located between the recesses 24 such that they are symmetrical with respect to the axis of the pulley 16. Each flat surface 25 is located closer to the wall surface 12a of the cover 12 than the flat bottom 24a of each recess 24. These recesses 24 and flat surfaces 25 each have a substantially sectorial shape and are located alternately at equiangular intervals (90°) in the circumferential direction of the pulley 16. The distance L1 between the bottom 24a and the wall surface 12a is greater than the distance L2 between the flat surface 25 and the wall surface 12a. A boundary 27 is located between each recess 24 and each flat surface 25. Accordingly, at the boundaries 27, the distance L1 changes to the distance L2 and vice versa. These boundaries 27 extend on the plate 19 from the boss 20 radially outward. Recesses 26a, defined on the outer surface 26 of the pulley 16, contribute to keeping rotational balance and lightening of the pulley 16.

The positional relationship between the shaft 15 and the pulley 16 with respect to the crank angle is such that the direction of the force applied to the shaft 15 when the engine combustion pressure is maximum is substantially parallel to the direction of the boundary 27. In other words, the pulley 16 is fixed to the shaft 15 in such a way that, when the piston is located near the top dead point, the axis of the cylinder is substantially parallel with the direction of the boundary 27.

Accordingly, under rotation of the pulley 16, the distance between the wall surface 12a and the inner surface 17 changes from L1 to L2 or vice versa near the boundary 27 on the plate 19. Thus, the resonance frequency value of the standing wave generated between the inner surface 17 and the wall surface 12a is changed. More specifically, the standing wave having a resonance frequency corresponding to the distance L1 is not fully amplified but is attenuated by the change in the distance from L1 to L2 as the wave is generated. Likewise, the standing wave having a resonance frequency corresponding to the distance L2 is prevented from being amplified by the change in the distance from L2 to L1 in the process that the wave is generated. Amplification of the standing wave having a specific resonance frequency can be controlled by repeating such phenomenon, and thus noise generated between the pulley 16 and the cover 12 is reduced.

In the pulley 16, the boundaries 27 serve as ribs. Accordingly, these ribs improve strength of the rim 18 in the direction that the pulley 16 is oscillated when it is operated to transmit power to other members. Thus, oscillation of the pulley 16 is controlled to reduce the amplitude of the standing wave.

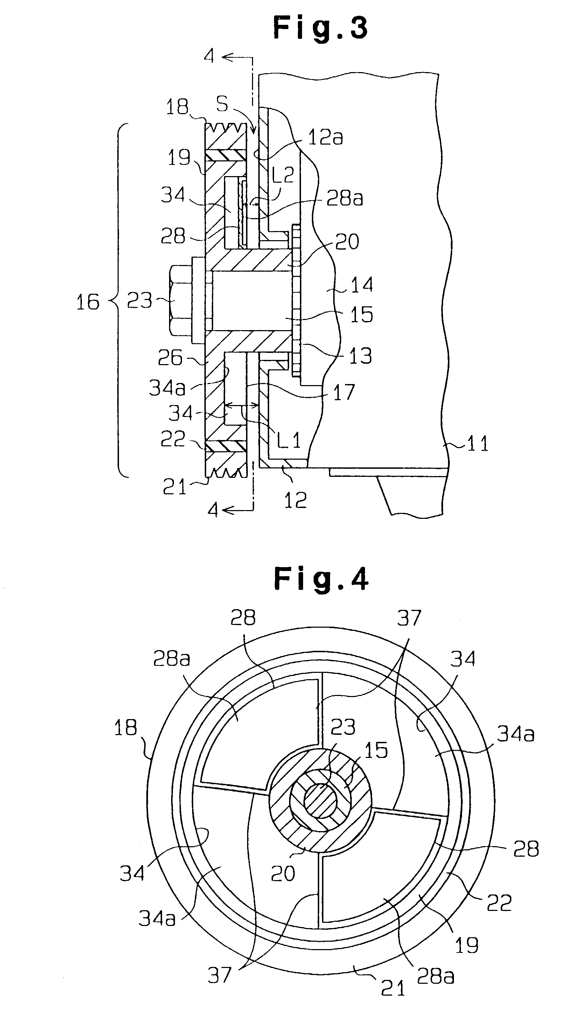

Next, a second embodiment of the power transmission apparatus according to the present invention will be described referring to Figs. 3 and 4. In the construction of the second embodiment, the elements similar to those of the first embodiment are given the same reference numbers and a description of them is omitted.

In the first embodiment, a plurality of substantially sectorial recesses 24 and a plurality of substantially sectorial flat surfaces 25 are located alternately on the inner surface of the plate 19; whereas, in the second embodiment, a continuous annular recess 34 is defined in the circumferential direction on the inner surface 17 of the plate 19.

In this recess 34, a pair of substantially sectorial lids 28 are provided at symmetrical positions with respect to the rotation center of the pulley 16 to partly close the recess 34. Thus, the inner surface 17 is composed of closed sections of the recess 34 closed by the lids 28 and open sections of the recess 34, which are arranged alternately. The distance L1 between the bottom 34a of the open section of the recess 34 and the wall surface 12a is greater than the distance L2 between the flat surface 28a of the lid 28 and the wall surface 12a. The open sections of the recess 34 and the flat surfaces 28a of the lids 28 define boundaries 37 respectively. These boundaries 37 extend from the boss 20 radially outward. In the second embodiment, the positional relationship between the shaft 15 and the pulley 16 is established such that the direction of the boundary 37 is substantially parallel to the direction of the pressure applied to the shaft 15 when the engine combustion pressure is maximum, i.e. when the piston locates near the top dead point.

Accordingly, the same actions and effects as in the first embodiment can be obtained in the second embodiment. The pulley in the second embodiment, unlike the counterpart in the first embodiment, has an annular recess on the inner surface 17 of the plate 19. This type of pulley is popular and generally available, so that the pulley 16 according to the second embodiment of the invention can be constructed by fitting the lids 28 in the recess of a commercially available pulley.

Generally, in an automotive engine, the combustion pressure of the cylinder locating closest to the crank pulley greatly influences oscillation of the pulley. Thus, the positional relationship between the shaft 15 and the pulley 16 is established such that the direction of the boundary 37 may be substantially parallel to the direction in which the combustion pressure is acted, when the combustion pressure of the cylinder closest to the pulley 16 is maximum. This brings about greater noise reduction.

In the first and second embodiments, when a standing wave is generated with the rotation of the pulley 16, the boundary 27 or 37 is located at the position where the standing wave is generated every time the crank angle is shifted by 180°. Accordingly, in the case of a four-cylinder engine, amplification of the standing wave can be controlled in synchronization with the timing of all of the cylinders.

Although only two embodiments of the present invention have been described herein, it should be apparent to those skilled in the art that the present invention may be embodied in many other specific forms without departing from the spirit or scope of the invention. Particularly it should be understood that the present invention may be embodied in the following manners:

In any of the foregoing embodiments, the inner surface 17 of the pulley 16 has flat portions which are located adjacent to the boundaries 27 or 37 and which are parallel to the wall surface 12a of the cover 12. In these flat portions, the distance L2 between the inner surface 17 and the wall surface 12a does not change. Otherwise, the flat portions located adjacent to the boundaries may not be necessarily parallel to the wall surface 12a. Further, the ratio of change in the distance at the boundary of the pulley on a circular orbit having a predetermined radius may be established to be great relative to that in other sites of the pulley. In this case again the similar actions and effects as in the above embodiments can be obtained.

While the present invention is realized in a power transmission apparatus having a belt pulley in an automotive engine in the above embodiments, the present invention may be applied to power transmission apparatuses having various types of pulleys other than in automotive engines, which resort to mechanisms for converting a linear motion into a rotational motion.

Therefore, the present examples and embodiments are to be considered as illustrative and not restrictive, and the invention is not to be limited to the details given herein, but may be modified within the scope of the appended claims.

A noise-reducing pulley arrangement is described. The pulley (16) has a plurality of recesses (24) and a plurality of flat surfaces (25) which are arranged alternately in the circumferential direction. A boundary (27) locating between each recess (24) and each flat surface (25) extends in the radial direction of the pulley (16). When pistons in cylinders of the engine reach the top dead points respectively, the direction of the corresponding boundary (27) conforms with the direction in which the piston force acts upon the shaft (15).

## Claims

1. A power transmission apparatus including a rotary shaft (15) disposed perpendicularly to and extending through a substantially flat wall surface (12a), and a transmission pulley (16) mounted on the rotary shaft (15), and remoted by a predetermined distance from and opposed to the wall surface (12a), said rotary shaft (15) periodically receives load acting perpendicularly to the rotary shaft (15), wherein power of the rotary shaft (15) is transmitted to driven members through the transmission pulley (16), and said transmission pulley (16) has an inner surface (17) opposing to the wall surface (12a),
characterized in that:
said inner surface (17) has at least one element (27,37) varying said distance on a one line extending parallel to an acting direction of the load and crossing a center of said transmission pulley(16).

2. The apparatus as set forth in Claim 1 characterized in that said element includes boundaries (27) between projections (25) and recesses (24) alternatingly disposed along a circumferencial direction in respect with the inner surface (17) of the transmission pulley (16).

3. The apparatus as set forth in Claim 2 characterized in that said recesses (24) and projections (25) are alternatingly separated by an equal phase.

4. The apparatus as set forth in Claim 1 characterized in that said the transmission pulley (16) has a circular recess (34) continuously extending in a circumferential direction in the inner surface (17), wherein said recess (34) is partially covered by cover members (28) to form covered portions and open portions and wherein said element (37) includes boundaries between the covered portions and the open portions.

5. The apparatus as set forth in Claim 4 characterized in that said covered portions and said open portions are alternatingly separated by an equal phase.

6. The apparatus as set forth in any one of the preceding claims characterized in that said rotary shaft includes a crank shaft (15) of an engine and the load is caused by a combustion pressure generated in a combustion chamber of the engine.

7. The apparatus as set forth in Claim 6 characterized in that said transmission pulley includes a crank pulley (16).

8. The apparatus as set forth in Claim 7 characterized in that said wall surface (12a) includes a part of a front cover (12) attached to a cylinder block (11) of the engine.

9. The apparatus as set forth in any one of Claims 6 through 8 characterized in that engine cylinders of the same number as the elements (27,37).

## Patentansprüche

1. Kraftübertragungsgerät, das eine senkrecht zu einer im wesentlichen flachen Wandfläche (12a) angeordnete Drehwelle (15), die sich durch diese hindurch erstreckt, und eine Übertragungsriemenscheibe (16) umfaßt, die auf der Drehwelle (15) montiert ist und um einen vorgegebenen Abstand von der Wandfläche (12a) entfernt ist und dieser gegenüberliegt, wobei die Drehwelle (15) regelmäßig eine Last aufnimmt, die senkrecht zu der Drehwelle (15) wirkt, wobei eine Kraft der Drehwelle (15) durch die Übertragungsriemenscheibe (16) auf die angetriebenen Elemente übertragen wird, und wobei die Übertragungsriemenscheibe (16) eine innere Fläche (17) hat, die der Wandfläche (12a) gegenüberliegt, **dadurch gekennzeichnet, daß:**
die innere Fläche (17) zumindest ein Element (27, 37) hat, das den Abstand auf einer Linie ändert, die sich parallel zu einer Wirkrichtung der Last erstreckt und eine Mitte der Übertragungsriemenscheibe (16) kreuzt.

2. Gerät nach Anspruch 1, **dadurch gekennzeichnet, daß** das Element Grenzen (27) zwischen Vorsprüngen (25) und Vertiefungen (24) umfaßt, die abwechselnd entlang einer Umfangsrichtung in Bezug auf die innere Fläche (17) der Übertragungsriemenscheibe (16) angeordnet sind.

3. Gerät nach Anspruch 2, **dadurch gekennzeichnet, daß** die Vertiefungen (24) und Vorsprünge (25) um eine gleiche Phase abwechselnd getrennt sind.

4. Gerät nach Anspruch 1, **dadurch gekennzeichnet, daß** die Übertragungsriemenscheibe (16) eine kreisförmige Vertiefung (34) hat, die sich kontinuierlich in einer Umfangsrichtung in der inneren Fläche (17) erstreckt, wobei der Vertiefung (34) teilweise durch Abdeckelemente (28) bedeckt ist, um bedeckte Abschnitte und offene Abschnitte zu bilden, und wobei das Element (37) Grenzen zwischen den bedeckten Abschnitten und den offenen Abschnitten umfaßt.

5. Gerät nach Anspruch 4, **dadurch gekennzeichnet, daß** die bedeckten Abschnitte und die offenen Abschnitte um eine gleiche Phase abwechselnd getrennt sind.

6. Gerät nach einem der vorhergehenden Ansprüche, **dadurch gekennzeichnet, daß** die Drehwelle eine Kurbelwelle (15) eines Motors umfaßt und die Last durch einen Verbrennungsdruck verursacht wird, der in einer Brennkammer des Motors erzeugt wird.

7. Gerät nach Anspruch 6, **dadurch gekennzeichnet, daß** die Übertragungsriemenscheibe eine Kurbelwellenriemenscheibe (16) umfaßt.

8. Gerät nach Anspruch 7, **dadurch gekennzeichnet, daß** die Wandfläche (12a) einen Teil eines vorderen Deckels (12) umfaßt, der an einem Zylinderblock (11) des Motors angebracht ist.

9. Gerät nach einem der Ansprüche 6 bis 8, **dadurch gekennzeichnet, daß** die Motorzylinder dieselbe Anzahl wie die Elemente (27, 37) haben.

## Revendications

1. Appareil de transmission de puissance, incluant un arbre rotatif (15) disposé perpendiculairement à une surface de paroi (12a) essentiellement plate et traversant celle-ci, et une poulie de transmission (16) montée sur l'arbre rotatif (15), et éloignée d'une certaine distance de la surface de paroi (12a) et opposée à celle-ci, ledit arbre rotatif (15) recevant périodiquement une charge agissant perpendiculairement à l'arbre rotatif (15), dans lequel la puissance de l'arbre rotatif (15) est transmise à des éléments menés par le biais de la poulie de transmission (16), et ladite poulie de transmission (16) a une surface interne (17) faisant face à la surface de paroi (12a), caractérisé en ce que:
ladite surface interne (17) a au moins un élément (27, 37) faisant varier ladite distance sur une ligne s'étendant parallèlement à une direction d'action de la charge et traversant un centre de ladite poulie de transmission (16).

2. Appareil selon la revendication 1, caractérisé en ce que ledit élément inclut des limites (27) entre des saillies (25) et des creux (24) disposés alternativement le long d'une direction circonférentielle par rapport à la surface interne (17) de la poulie de transmission (16).

3. Appareil selon la revendication 2, caractérisé en ce que lesdits creux (24) et lesdites saillies (25) sont séparés alternativement par une phase égale.

4. Appareil selon la revendication 1, caractérisé en ce que la poulie de transmission (16) a un creux circulaire (34) s'étendant de façon continue dans une direction circonférentielle dans la surface interne (17), dans lequel ledit creux (34) est partiellement couvert par des éléments de couverture (28) pour former des portions couvertes et des portions ouvertes et dans lequel ledit élément (37) inclut des limites entre les portions couvertes et les portions ouvertes.

5. Appareil selon la revendication 4, caractérisé en ce que lesdites portions couvertes et lesdites portions ouvertes sont séparées alternativement par une phase égale.

6. Appareil selon l'une quelconque des revendications précédentes, caractérisé en ce que ledit arbre rotatif inclut un vilebrequin (15) d'un moteur et en ce que la charge est provoquée par une pression de combustion générée dans une chambre de combustion du moteur.

7. Appareil selon la revendication 6, caractérisé en ce que ladite poulie de transmission inclut une poulie de vilebrequin (16).

8. Appareil selon la revendication 7, caractérisé en ce que ladite surface de paroi (12a) inclut une partie d'un couvercle avant (12) attachée à un bloc-cylindres (11) du moteur.

9. Appareil selon l'une quelconque des revendications 6 à 8, caractérisé en ce que les cylindres du moteur sont au même nombre que les éléments (27, 37).
